# NEW EUROPEAN PATENT SPECIFICATION

(11) **EP 3 636 882 B2**
(45) Date of publication and mention of the opposition decision: **21.10.2026**
(45) Mention of the grant of the patent: 06.09.2023
(21) Application number: 19211067.4
(22) Date of filing: 11.12.2017
(51) Int. Cl.: F01D 9/06

(54) **GAS TURBINE ENGINE**
GASTURBINENTRIEBWERK
MOTEUR À TURBINE À GAZ

(30) Priority: 12.12.2016 US 201615375827
(43) Date of publication of application: 15.04.2020
(62) Document number(s) of the earlier application(s) in accordance with Art. 76 EPC: 17206360.4 / 3 342 986
(73) Proprietor: RTX Corporation, Farmington, CT 06032 (US)
(72) Inventor: FORBES, John David, Manchester, CT Connecticut 06040 (US); ANSELMI, Gregory, Vernon, CT Connecticut 06066 (US); BOTNICK, Christina E., East Hartford, CT Connecticut 06118 (US); KAUFMAN, Eleanor D., Rocky Hill, CT Connecticut 06067 (US); LEON, Jeffrey, Glastonbury, CT Connecticut 06033 (US); LEVINE, Jeffrey R., Tolland, CT Connecticut 06084 (US); MACE, Gerald M., Wallingford, CT Connecticut 06492 (US); NADEAU, Daniel C., Wethersfield, CT Connecticut 06109 (US); KASHYAP, Tania Bhatia, West Hartford, CT Connecticut 06107 (US); ALLEN, Richard N., West Hartford, CT Connecticut 06107 (US)
(74) Representative: Dehns

(56) References cited:
- WO-A1-2014/007934
- WO-A1-2016/039714
- WO-A2-2014/035516
- US-B2- 8 205 458

## Description

### TECHNICAL FIELD

The present invention relates to gas turbine engines.

### BACKGROUND ART

Gas turbine engines are provided with turbine vanes that extend into a core flow path of the gas turbine engine. The turbine vanes generally do not rotate but guide airflow. The turbine vane is provided with cooling features to protect the turbine vane from the hot combustion gases. Some of the cooling features of the turbine vane may be subject to oxidation. Accordingly it is desirable to provide a gas turbine engine including a turbine vane having cooling features that reduce turbine vane operating temperatures as well as mitigate oxidation.

WO 2014/007934 A1 and WO 2014/035516 A2 disclose gas turbine engines according to the preamble of claim 1.

### BRIEF DESCRIPTION

Viewed from one aspect the present invention provides a gas turbine engine according to claim 1.

In preferred embodiments, the outer platform comprises a plurality of first outer cooling holes disposed proximate the leading edge, a plurality of second outer cooling holes disposed proximate the trailing edge and the suction side, and a plurality of third outer cooling holes disposed proximate the pressure side and wrapping around the trailing edge and extending towards the suction side.

In certain embodiments, the plurality of first outer cooling holes has a first diameter and the plurality of second outer cooling holes has a second diameter that is less than the first diameter.

In certain embodiments the inner platform comprises the pluralities of first, second and third inner cooling holes positioned substantially at geometric coordinates in accordance with Cartesian coordinate values of Xi, Yi, and Zi as set forth in Table 1, wherein each of the geometric coordinates is measured from a reference point on an engine centreline, with the X-axis defined along the direction of the engine centreline and the Z-axis defined in a radial direction. The cooling holes have a positional tolerance of their centrepoint relative to the coordinates within a diameter of at least one of 0.558 mm (0.022 inches) and 0.431 mm (0.017 inches).

In certain embodiments, the outer platform may comprise the pluralities of first, second and third outer cooling holes positioned substantially at geometric coordinates in accordance with Cartesian coordinate values of Xo, Yo, Zo as set forth in Table 2 wherein each of the geometric coordinates is measured from a reference point on the engine centreline, with the X-axis defined along the direction of the engine centreline and the Z-axis defined in a radial direction. The cooling holes have a positional tolerance of their centrepoint relative to the coordinates within a diameter of at least one of 0.558 mm (0.022 inches) and 0.431 mm (0.017 inches).

The plurality of second outer cooling holes disposed proximate the trailing edge and the suction side may extend towards the leading edge.

The plurality of third outer cooling holes disposed proximate the pressure side may extend between the leading edge and the trailing edge.

In certain embodiments, the plurality of second inner cooling holes may extend between 60% and 100% of a chordal extent.

In certain embodiments, the plurality of third inner cooling holes may extend between 50% and 100% of a chordal extent.

In certain embodiments, the plurality of second outer cooling holes may extend between 50% and 100% of a chordal extent.

### BRIEF DESCRIPTION OF THE DRAWINGS

The following descriptions should not be considered limiting in any way. With reference to the accompanying drawings, like elements are numbered alike:
FIG. 1 is a schematic illustration of a gas turbine engine;
FIG. 2 is a cross-sectional view of a portion of the gas turbine engine;
FIG. 3 is a perspective view of a turbine vane;
FIG. 4 is an elevation view of an inner platform of the turbine vane along section line 4-4; and
FIG. 5 is an elevation view of an outer platform of the turbine vane along section line 5-5.

### DETAILED DESCRIPTION

A detailed description of one or more embodiments of the disclosed apparatus and method are presented herein by way of exemplification and not limitation with reference to the Figures.

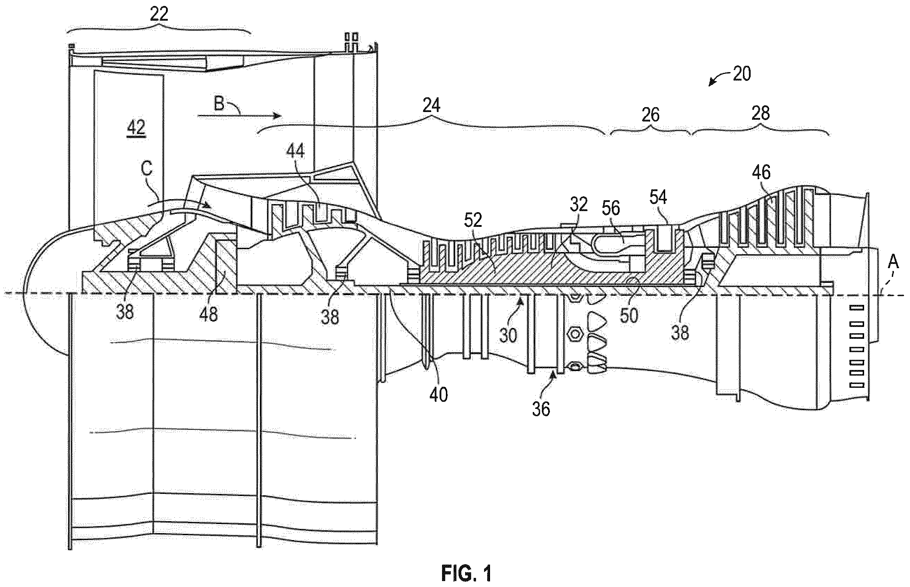

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54.

A combustor 56 of the combustor section 26 is arranged in the gas turbine engine 20. The combustor 56 is arranged between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28.

The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

Although the gas turbine engine 20 is depicted as a turbofan, it should be understood that the concepts described herein are not limited to use with the described configuration, as the teachings may be applied to other types of engines such as, but not limited to, turbojets, turboshafts, and three-spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

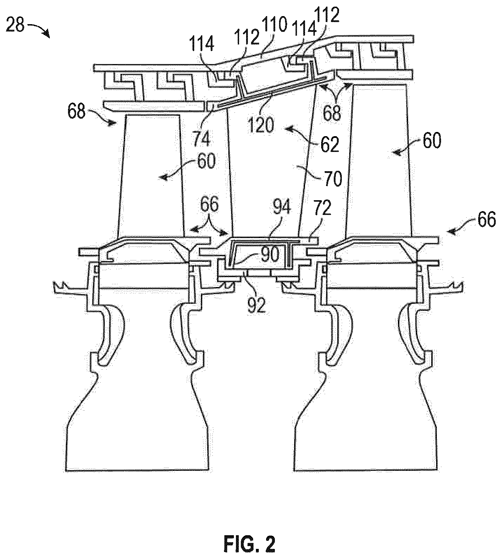

FIG. 2 is a schematic view of a portion of the turbine section 28 that may employ various embodiments disclosed herein. Turbine section 28 includes a plurality of airfoils including, for example, at least one blade 60 and at least one vane 62. The blade 60 or the vane 62 may be a hollow body with internal cavities defining a number of channels or cores, hereinafter airfoil cores, formed therein and extending from an inner diameter 66 to an outer diameter 68, or vice versa. The airfoil cores may be separated by partitions within the blade 60 or the vane 62 that may extend between the inner diameter 66 and the outer diameter 68 of the blade 60 or the vane 62. The partitions may extend for a portion of the length of the blade 60 or the vane 62, but may stop or end prior to forming a complete wall within the blade 60 or the vane 62. Thus, each of the airfoil cores may be fluidly connected and form a fluid path within the blade 60 or the vane 62.

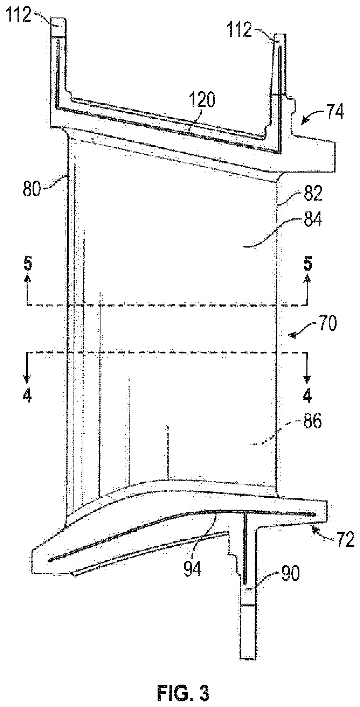

Referring to FIGS. 2 to 5, the vane 62 may include an airfoil 70 radially extending between an inner platform 72 and an outer platform 74. The airfoil 70 provides a leading edge 80, a trailing edge 82 disposed opposite the leading edge 80, a pressure side 84 axially extending between the leading edge 80 and the trailing edge 82, and a suction side 86 disposed opposite the pressure side 84 and axially extending between the leading edge 80 and the trailing edge 82. A chord length 88 is defined between the leading edge 80 and the trailing edge 82.

The inner platform 72 is located proximate the inner diameter 66. The inner platform 72 includes a radially inwardly extending tab 90. The radially inwardly extending tab 90 extends from the inner platform 72 and connects the vane 62 to an inner sealing member 92.

The inner platform 72 defines an inner cooling passage 94, a plurality of first inner cooling holes 96, a plurality of second inner cooling holes 98, and a plurality of third inner cooling holes 100. The inner cooling passage 94 extends through the tab 90 and the body of the inner platform 72. The inner cooling passage 94 is fluidly connected to an airflow port and/or bleed orifice. The inner cooling passage 94 facilitates air to flow from a cooling air source and onto the inner platform 72 through the plurality of first inner cooling holes 96, the plurality of second inner cooling holes 98, and the plurality of third inner cooling holes 100. The plurality of inner cooling holes may have a cone shape, a rounded shape, an elongated slot shape, as well as other shapes.

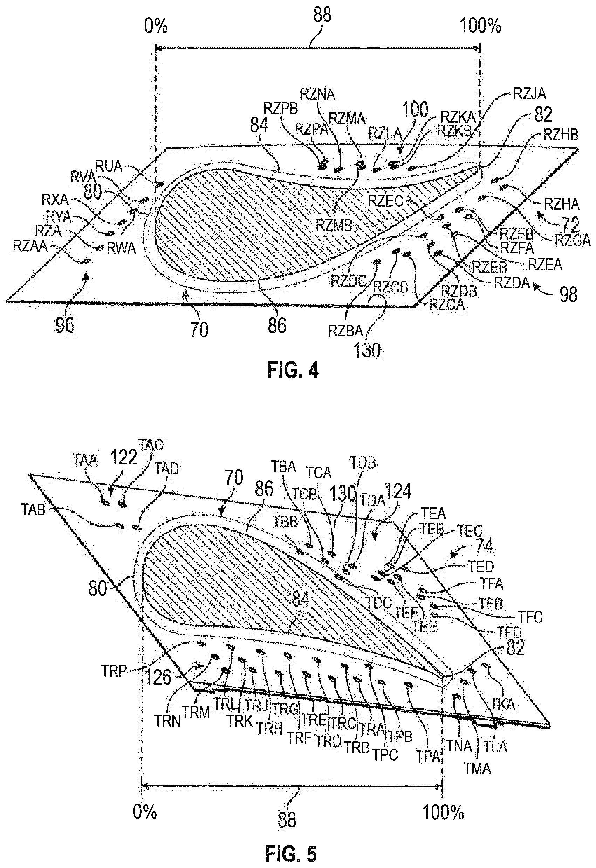

Referring to FIG. 4, the plurality of first inner cooling holes 96 are fluidly connected to the inner cooling passage 94. The plurality of first inner cooling holes 96 are disposed proximate the leading edge 80. The plurality of first inner cooling holes 96 extend circumferentially across the inner platform 72 from a point circumferentially spaced apart from the pressure side 84 and extend towards the suction side 86 of the airfoil 70.

The plurality of first inner cooling holes 96 have a first diameter and a first density. The density of the plurality of first inner cooling holes 96 corresponds to a total number of cooling holes within a given area.

The plurality of first inner cooling holes 96 extends generally in a row. The row of the plurality of first inner cooling holes 96 includes cooling holes RUA, RVA, RWA, RXA, RYA, RZA, and RZAA.

The plurality of second inner cooling holes 98 are fluidly connected to the inner cooling passage 94. The plurality of second inner cooling holes 98 are spaced apart from the plurality of first inner cooling holes 96. The plurality of second inner cooling holes 98 are disposed proximate the trailing edge 82 and the suction side 86. The plurality of second inner cooling holes 98 extend from the trailing edge 82 towards the leading edge 80. The plurality of second inner cooling holes 98 extend between 60% and 100% of the chord length 88.

The plurality of second inner cooling holes 98 have a second diameter and a second density. The second diameter of the plurality of second inner cooling holes 98 is greater than the first diameter of the plurality of first inner cooling holes 96. The second density of the plurality of second inner cooling holes 98 is greater than the first density of the plurality of first inner cooling holes 96. The larger diameter and greater density of the plurality of second inner cooling holes 98 facilitates improved or greater cooling of the inner platform 72 to reduce material temperature at the inner platform 72 and therefore mitigate the potential of oxidation on the inner platform 72.

The plurality of second inner cooling holes 98 includes cooling holes RZBA, RZCB, RZCA, RZDA, RZDB, RZDC, RZEA, RZEB, RZEC, RZFA, RZFB, RZGA, RZHA, and RZHB.

The plurality of third inner cooling holes 100 are fluidly connected to the inner cooling passage 94. The plurality of third inner cooling holes 100 are spaced apart from the plurality of first inner cooling holes 96 and the plurality of second inner cooling holes 98. The plurality of third inner cooling holes 100 are disposed proximate the trailing edge 82 and the pressure side 84. The plurality of third inner cooling holes 100 extend from the trailing edge 82 towards the leading edge 80. The plurality of third inner cooling holes 100 extend between 50% and 100% of the chord length 88.

The plurality of third inner cooling holes 100 have a third diameter and a third density. The third diameter of the plurality of third inner cooling holes 100 is greater than the first diameter of the plurality of the first inner cooling holes 96. The third density of the plurality of third inner cooling holes 100 is greater than the first density of the plurality of first inner cooling holes 96. In at least one embodiment the third diameter is equal to the second diameter and the third density is equal to the second density. The larger diameter and greater density of the plurality of third inner cooling holes 100 facilitates improved cooling of the inner platform 72 to reduce material temperature at the inner platform 72 and therefore mitigate the potential of oxidation on the inner platform 72.

The plurality of third inner cooling holes 100 includes cooling holes RZJA, RZKA, RZKB, RZLA, RZMA, RZMB, RZNA, RZPA, and RZPB.

Table 1 identifies each cooling hole of the plurality of first inner cooling holes 96, the plurality of second inner cooling holes 98, and the plurality of third inner cooling holes 100 that are disposed or formed on the inner platform 72. The three or four-letter identifier denotes the row (the first two letters) and the column (the third letter or the third and fourth letters). The number denotes the hole numbers of the cooling hole. The geometric coordinates, Xi, Yi, Zi, represent an approximate true position of a nominal part of a centre point of the cooling hole.

The geometric coordinates are in accordance with or in substantial conformance with a Cartesian coordinate system that has orthogonally related X, Y, and Z axes. The X axis is defined along the direction of the engine centreline longitudinal axis A, the Y axis is defined in a substantially circumferential or rotational direction about the engine centreline longitudinal axis A, and the Z axis is defined in a radial direction that is substantially perpendicular to the engine centreline longitudinal axis A. Each of the geometric coordinates is measured from a reference point located at an intersection of at least one casting datum and the engine centreline longitudinal axis A. The Cartesian coordinate values are expressed in inches to a centre point of each cooling holes. However, the values of Table 1 could be converted to millimetres by multiplying by 25.4, or could be converted to any other units. The cooling holes have a diametrical surface tolerance relative to the specified coordinates of 0.558 mm (0.022 inches) or 0.431 mm (0.017 inches). In other words, due to manufacturing tolerances, the external breakout of the centreline of each cooling hole may fall within a 0.558 mm (0.022 inch) diameter circle or a 0.431 mm (0.017 inch) diameter circle inscribed on the surface of the inner platform 72.

**TABLE 1**

| | HOLE # | Xi mm (inches) | | Yi mm (inches) | | Zi mm (inches) | |
|---|---|---|---|---|---|---|---|
| RAA | 1 | -21.69 | (-0.854) | 45.75 | (1.801) | 367.39 | (14.464) |
| RBA | 2 | -14.66 | (-0.577) | 38.74 | (1.525) | 373.25 | (14.695) |
| RCA | 3 | -9.35 | (-0.368) | 33.43 | (1.316) | 376.48 | (14.822) |
| RDA | 4 | -3.94 | (-0.155) | 28.02 | (1.103) | 378.64 | (14.907) |
| REA | 5 | 33.20 | (1.307) | -16.23 | (-0.639) | 378.41 | (14.898) |
| RFA | 6 | 33.20 | (1.307) | -21.82 | (-0.859) | 378.10 | (14.886) |
| RGA | 7 | 33.20 | (1.307) | -27.41 | (-1.079) | 377.75 | (14.872) |
| RHA | 8 | 33.20 | (1.307) | -32.99 | (-1.299) | 377.29 | (14.854) |
| RJA | 9 | 33.20 | (1.307) | -38.58 | (-1.519) | 376.76 | (14.833) |
| RKA | 10 | 33.20 | (1.307) | -44.17 | (-1.739) | 376.15 | (14.809) |
| RLA | 11 | 33.20 | (1.307) | -49.76 | (-1.959) | 375.46 | (14.782) |
| RMA | 12 | 9.86 | (0.388) | -35.00 | (-1.378) | 378.56 | (14.904) |
| RNA | 13 | 4.19 | (0.165) | -29.39 | (-1.157) | 379.48 | (14.940) |
| RPA | 14 | -1.37 | (-0.054) | -23.80 | (-0.937) | 379.45 | (14.939) |
| RRA | 15 | -6.81 | (-0.268) | -18.19 | (-0.716) | 378.61 | (14.906) |
| RSA | 16 | -12.17 | (-0.479) | -12.57 | (-0.495) | 376.91 | (14.839) |
| RTA | 17 | -17.40 | (-0.685) | -6.96 | (-0.274) | 374.32 | (14.737) |
| RUA | 18 | -23.24 | (-0.915) | 11.40 | (0.449) | 372.49 | (14.665) |
| RVA | 19 | -23.04 | (-0.907) | 15.77 | (0.621) | 372.47 | (14.664) |
| RWA | 20 | -22.99 | (-0.905) | 19.58 | (0.771) | 372.31 | (14.658) |
| RXA | 21 | -22.83 | (-0.899) | 22.94 | (0.903) | 372.24 | (14.655) |
| RYA | 22 | -22.81 | (-0.898) | 26.26 | (1.034) | 372.03 | (14.647) |
| RZA | 23 | -22.53 | (-0.887) | 30.02 | (1.182) | 371.96 | (14.644) |
| RZAA | 24 | -22.61 | (-0.890) | 33.96 | (1.337) | 371.55 | (14.628) |
| RZBA | 25 | 21.08 | (0.830) | -12.01 | (-0.473) | 381.15 | (15.006) |
| RZCA | 26 | 24.46 | (0.963) | -17.07 | (-0.672) | 380.70 | (14.988) |
| RZCB | 27 | 22.45 | (0.884) | -15.90 | (-0.626) | 380.90 | (14.996) |
| RZDA | 28 | 28.91 | (1.138) | -22.00 | (-0.866) | 380.11 | (14.965) |
| RZDB | 29 | 26.31 | (1.036) | -22.00 | (-0.866) | 380.31 | (14.973) |
| RZDC | 30 | 23.90 | (0.941) | -22.28 | (-0.877) | 380.47 | (14.979) |
| RZEA | 31 | 28.17 | (1.109) | -26.95 | (-1.061) | 379.83 | (14.954) |
| RZEB | 32 | 25.70 | (1.012) | -26.97 | (-1.062) | 380.03 | (14.962) |
| RZEC | 33 | 23.75 | (0.935) | -27.71 | (-1.091) | 380.11 | (14.965) |
| RZFA | 34 | 27.51 | (1.083) | -31.88 | (-1.255) | 379.50 | (14.941) |
| RZFB | 35 | 25.22 | (0.993) | -31.90 | (-1.256) | 379.68 | (14.948) |
| RZGA | 36 | 26.70 | (1.051) | -36.83 | (-1.450) | 379.12 | (14.926) |
| RZHA | 37 | 28.17 | (1.109) | -41.73 | (-1.643) | 378.51 | (14.902) |
| RZHB | 38 | 26.01 | (1.024) | -41.43 | (-1.631) | 378.71 | (14.910) |
| RZJA | 39 | 12.24 | (0.482 | -30.53 | (-1.202) | 380.77 | (14.991) |
| RZKA | 40 | 8.31 | (0.327) | -28.04 | (-1.104) | 381.25 | (15.010) |
| RZKB | 41 | 9.02 | (0.355) | -27.25 | (-1.073) | 381.25 | (15.010) |
| RZLA | 42 | 7.09 | (0.279) | -24.82 | (-0.977) | 381.58 | (15.023) |
| RZMA | 43 | 3.96 | (0.156) | -23.29 | (-0.917) | 381.84 | (15.033) |
| RZMB | 44 | 4.70 | (0.185) | -22.53 | (-0.887) | 381.86 | (15.034) |
| RZNA | 45 | 1.60 | (0.063) | -18.87 | (-0.743) | 382.04 | (15.041) |
| RZPA | 46 | -2.01 | (-0.079) | -17.35 | (-0.683) | 381.79 | (15.031) |
| RZPB | 47 | -1.30 | (-0.051) | -16.61 | (-0.654) | 381.91 | (15.036) |

Referring to FIGS. 2 to 5, the outer platform 74 is located proximate the outer diameter 68. The outer platform 74 is disposed proximate a case 110 that is disposed about the turbine section 28. The outer platform 74 is arranged to operatively connect the vane 62 to the case 110. The outer platform 74 includes a vane hook 112 that extends from the outer platform 74 towards the case 110. The vane hook 112 engages a case hook 114 that extends from the case 110 towards the outer platform 74. The vane hook 112 engages the case hook 114 to secure the vane 62 to the case 110.

The outer platform 74 defines an outer cooling passage 120, a plurality of first outer cooling holes 122, a plurality of second outer cooling holes 124, and a plurality of third outer cooling holes 126. The outer cooling passage 120 extends through the vane hook 112 and the body of the outer platform 74. The outer cooling passage 120 is fluidly connected to an airflow ports and/or a bleed orifice. The outer cooling passage hundred and 20 facilitates air to flow from a cooling air source and onto the outer platform 74 through the plurality of first outer cooling holes 122, the plurality of second outer cooling holes 124, and the plurality of third outer cooling holes 126. The plurality of outer cooling holes may have a cone shape, a rounded shape, an elongated slot shape, as well as other shapes.

Referring to FIG. 5, the plurality of first outer cooling holes 122 are fluidly connected to the outer cooling passage 120. The plurality of first outer cooling holes 122 are disposed proximate the leading edge 80. The plurality of first outer cooling holes 122 and are spaced apart from the pressure side 84 and the suction side 86.

The plurality of first outer cooling holes 122 has a first diameter that is equal to the first diameter of the plurality of first inner cooling holes 96. The plurality of first outer cooling holes 122 have a first density that is equal to the first density of the plurality of first inner cooling holes 96.

The plurality of first outer cooling holes 122 includes cooling holes TAA, TAB, TAC, and TAD.

The plurality of second outer cooling holes 124 are fluidly connected to the outer cooling passage 120. The plurality of second outer cooling holes 124 are spaced apart from the plurality of first outer cooling holes 122. The plurality of second outer cooling holes 124 are disposed proximate the trailing edge 82 and the suction side 86. The plurality of second outer cooling holes 124 extend from the trailing edge 82 towards the leading edge 80. In at least one embodiment, the plurality of second outer cooling holes 124 is spaced apart from the trailing edge 82. The plurality of second outer cooling holes 124 extend between 50% and 90% of the chord length 88.

The plurality of second outer cooling holes 124 have a second diameter and a second density. The second diameter of the plurality of second outer cooling holes 124 is greater than the diameter of the plurality of first outer cooling holes 122. The second density of the plurality of second outer cooling holes 124 is greater than the density of the plurality of first outer cooling holes 122. The larger diameter and greater density of the plurality of second outer cooling holes 124 facilitates improved cooling of the outer platform 74 to reduce material temperature at the outer platform 74 and therefore mitigates the potential of oxidation on the outer platform 74.

The plurality of second outer cooling holes 124 includes cooling holes TBB, TBA, TCB, TCA, TDC, TDB, TDA, TEA, TEB, TEC, TED, TEE, TEF, TFA, TFB, TFC, TFD, TKA, TLA, TMA, and TNA.

The plurality of third outer cooling holes 126 are fluidly connected to the outer cooling passage 120. The plurality of third outer cooling holes 126 are spaced apart from the plurality of first outer cooling holes 122 and the plurality of second outer cooling holes 124. The plurality of third outer cooling holes 126 are disposed proximate the pressure side 84. The plurality of third outer cooling holes 126 extend between the leading edge 80 and the trailing edge 82. The plurality of third outer cooling holes 126 extend beyond the trailing edge 82 and wrap around and extend towards the suction side 86. The plurality of third outer cooling holes 126 extend between 0% and 100% of the chord length 88. In at least one embodiment, the plurality of third outer cooling holes 126 extends between 15% and 90% of the chord length 88.

The plurality of third outer cooling holes 126 have a third diameter and a third density. The third diameter of the plurality of third outer cooling holes 126 is substantially similar to the diameter of the plurality of first outer cooling holes 122. The third density of the plurality of third outer cooling holes 126 is substantially similar to the density of the plurality of first outer cooling holes 122.

Table 2 identifies each cooling hole of the plurality of first outer cooling holes 122, the plurality of second outer cooling holes 124, and the plurality of third outer cooling holes 126 that are disposed or formed on the outer platform 74. The three-letter identifier denotes the row (the first two letters) and the column (the third letter). The number denotes the hole number of the cooling hole. The geometric coordinates, Xo, Yo, Zo, represent an approximate true position of a nominal part of a centre point of the cooling hole.

The geometric coordinates are in accordance with or in substantial conformance with a Cartesian coordinate system that has orthogonally related X, Y, and Z axes. The X axis is defined along the direction of the engine centreline longitudinal axis A, the Y axis is defined in a substantially circumferential or rotational direction about the engine centreline longitudinal axis A, and the Z axis is defined in a radial direction that is substantially perpendicular to the engine centreline longitudinal axis A. Each of the geometric coordinates is measured from the reference point located at the intersection of at least one casting datum and the engine centreline longitudinal axis A. The reference point for the locations of the plurality of outer cooling holes may be the same reference point for the locations of the plurality of inner cooling holes. The Cartesian coordinate values are expressed in inches. However, the values of Table 2 could be converted to millimetres by multiplying by 25.4, or could be converted to any other units. The cooling holes have a diametrical surface tolerance relative to the specified coordinates of 0.558 mm (0.022 inches) or 0.431 mm (0.017 inches). In other words, due to manufacturing tolerances, the external breakout of the centreline of each cooling hole may fall within a 0.558 mm (0.022 inch) diameter circle or a 0.431 mm (0.017 inch) diameter circle inscribed on the surface of the outer platform 74.

**TABLE 2**

| | HOLE # | Xo mm (inches) | | Yo mm (inches) | | Zo mm (inches) | |
|---|---|---|---|---|---|---|---|
| TAA | 1 | -14.86 | (-0.585) | 30.89 | (1.216) | 457.71 | (18.020) |
| TAB | 2 | -15.32 | (-0.603) | 24.38 | (0.960) | 458.19 | (18.039) |
| TAC | 3 | -11.91 | (-0.469) | 28.35 | (1.116) | 457.20 | (18.000) |
| TAD | 4 | -12.34 | (-0.486) | 22.23 | (0.875) | 457.63 | (18.017) |
| TBA | 5 | 16.38 | (0.645) | -6.65 | (-0.262) | 451.69 | (17.783) |
| TBB | 6 | 14.02 | (0.552) | -6.40 | (-0.252) | 451.99 | (17.795) |
| TCA | 7 | 19.84 | (0.781) | -11.18 | (-0.440) | 450.85 | (17.750) |
| TCB | 8 | 17.17 | (0.676) | -11.15 | (-0.439) | 451.41 | (17.772) |
| TDA | 9 | 21.46 | (0.845) | -15.98 | (-0.629) | 450.49 | (17.736) |
| TDB | 10 | 19.41 | (0.764) | -16.18 | (-0.637) | 450.77 | (17.747) |
| TDC | 11 | 17.40 | (0.685) | -16.51 | (-0.650) | 450.95 | (17.754) |
| TEA | 12 | 27.76 | (1.093) | -20.85 | (-0.821) | 450.27 | (17.727) |
| TEB | 13 | 24.87 | (0.979) | -20.85 | (-0.821) | 450.27 | (17.727) |
| TEC | 14 | 21.89 | (0.862) | -20.93 | (-0.824) | 450.27 | (17.727) |
| TED | 15 | 31.12 | (1.225) | -25.88 | (-1.019) | 450.01 | (17.717) |
| TEE | 16 | 28.80 | (1.134) | -25.83 | (-1.017) | 450.01 | (17.717) |
| TEF | 17 | 26.49 | (1.043) | -25.88 | (-1.019) | 450.01 | (17.717) |
| TFA | 18 | 30.73 | (1.210) | -30.10 | (-1.185) | 449.73 | (17.706) |
| TFB | 19 | 29.31 | (1.154) | -30.86 | (-1.215) | 449.68 | (17.704) |
| TFC | 20 | 30.51 | (1.201) | -34.14 | (-1.344) | 449.45 | (17.695) |
| TFD | 21 | 29.49 | (1.161) | -36.04 | (-1.419) | 449.30 | (17.689) |
| TKA | 22 | 31.80 | (1.252) | -50.88 | (-2.003) | 447.85 | (17.632) |
| TLA | 23 | 28.60 | (1.126) | -51.51 | (-2.028) | 447.78 | (17.629) |
| TMA | 24 | 25.58 | (1.007) | -52.53 | (-2.068) | 447.65 | (17.624) |
| TNA | 25 | 22.73 | (0.895) | -53.85 | (-2.120) | 447.50 | (17.618) |
| TPA | 26 | 15.21 | (0.599) | -44.91 | (-1.768) | 449.76 | (17.707) |
| TPB | 27 | 10.80 | (0.425) | -40.92 | (-1.611) | 451.13 | (17.761) |
| TPC | 28 | 10.39 | (0.409) | -35.76 | (-1.408) | 451.66 | (17.782) |
| TRA | 29 | 6.53 | (0.257) | -37.03 | (-1.458) | 452.42 | (17.812) |
| TRB | 30 | 6.17 | (0.243) | -32.39 | (-1.275) | 452.86 | (17.829) |
| TRC | 31 | 2.08 | (0.082) | -33.02 | (-1.300) | 453.72 | (17.863) |
| TRD | 32 | 1.65 | (0.065) | -27.58 | (-1.086) | 454.20 | (17.882) |
| TRE | 33 | -2.36 | (-0.093) | -29.01 | (-1.142) | 455.02 | (17.914) |
| TRF | 34 | -2.84 | (-0.112) | -22.81 | (-0.898) | 455.47 | (17.932) |
| TRG | 35 | -6.81 | (-0.268) | -24.99 | (-0.984) | 456.23 | (17.962) |
| TRH | 36 | -7.34 | (-0.289) | -18.08 | (-0.712) | 456.69 | (17.980) |
| TRJ | 37 | -11.25 | (-0.443) | -20.96 | (-0.825) | 457.45 | (18.010) |
| TRK | 38 | -11.53 | (-0.454) | -17.20 | (-0.677) | 457.68 | (18.019) |
| TRL | 39 | -11.84 | (-0.466) | -13.46 | (-0.530) | 457.86 | (18.026) |
| TRM | 40 | -15.70 | (-0.618) | -16.94 | (-0.667) | 458.62 | (18.056) |
| TRN | 41 | -16.00 | (-0.630) | -13.08 | (-0.515) | 458.80 | (18.063) |
| TRP | 42 | -16.28 | (-0.641) | -9.25 | (-0.364) | 458.98 | (18.070) |

A thermal barrier coating 130 may be applied to at least one of the inner platform 72 and the outer platform 74. The thermal barrier coating 130 may be applied to the platforms after the forming or drilling of the plurality of cooling holes.

The term "approximate" is intended to include the degree of error associated with measurement of the particular quantity based upon the equipment available at the time of filing the application. For example, "approximate" can include a range of ± 8% or 5%, or 2% of a given value.

The terminology used herein is for the purpose of describing particular embodiments only and is not intended to be limiting of the present disclosure. As used herein, the singular forms "a", "an", and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A gas turbine engine (20), comprising:
a turbine section (28) disposed adjacent to a combustor section (26), the turbine section including:
a turbine vane (62) having an inner platform (72) and an outer platform (74) joined together by an airfoil (70) having a pressure side (84) and a suction side (86) each extending between a leading edge (80) and a trailing edge (82),
the inner platform (72) comprising a plurality of second inner cooling holes (98) disposed proximate the trailing edge (82) and the suction side (86) and extending from the trailing edge (82) towards the leading edge (80), and a plurality of third inner cooling holes (100) disposed proximate the trailing edge (82) and the pressure side (84) and extending from the trailing edge (82) towards the leading edge (80), **characterized in that** the inner platform (72) comprises a plurality of first inner cooling holes (96) disposed proximate the leading edge (80) and extending circumferentially across the inner platform (72) from a point circumferentially spaced apart from the pressure side (84) and extending towards the suction side (86),
wherein the plurality of first inner cooling holes (96) have a first diameter and the plurality of second inner cooling holes (98) have a second diameter, and the second diameter of the plurality of second inner cooling holes (98) is greater than the first diameter of the plurality of first inner cooling holes (96),
wherein the plurality of first inner cooling holes (96) have a first density and the plurality of second inner cooling holes (98) have a second density, and the second density of the plurality of second inner cooling holes (98) is greater than the first density of the plurality of first inner cooling holes (96).

2. The gas turbine engine (20) of claim 1, wherein the outer platform (74) comprises a plurality of first outer cooling holes (122) disposed proximate the leading edge (80), a plurality of second outer cooling holes (124) disposed proximate the trailing edge (82) and the suction side (86), and a plurality of third outer cooling holes (126) disposed proximate the pressure side (84) and wrapping around the trailing edge (82) and extending towards the suction side (86).

3. The gas turbine engine (20) of claim 2, wherein the plurality of first outer cooling holes (122) has a first diameter and the plurality of second outer cooling holes (124) has a second diameter that is less than the first diameter.

4. The gas turbine engine (20) of any preceding claim, wherein the inner platform (72) comprises the pluralities of first, second and third inner cooling holes (96, 98, 100) positioned substantially at geometric coordinates in accordance with Cartesian coordinate values of Xi, Yi, and Zi as set forth in Table 1, wherein each of the geometric coordinates is measured from a reference point on an engine centreline (A) with the X-axis defined along the direction of the engine centreline (A) and the Z-axis defined in a radial direction, the cooling holes have a positional tolerance of their centrepoint relative to the coordinates within a diameter of at least one of 0.558 mm (0.022 inches) and 0.431 mm (0.017 inches).

5. The gas turbine engine (20) of claim 2, or of any preceding claim when dependent on claim 2, wherein the outer platform (74) comprises the pluralities of first, second and third outer cooling holes (122, 124, 126) positioned substantially at geometric coordinates in accordance with Cartesian coordinate values of Xo, Yo, Zo as set forth in Table 2, wherein each of the geometric coordinates is measured from a reference point on the engine centreline (A) with the X-axis defined along the direction of the engine centreline (A) and the Z-axis defined in a radial direction, the cooling holes have a positional tolerance of their centrepoint relative to the coordinates within a diameter of at least one of 0.558 mm (0.022 inches) and 0.431 mm (0.017 inches).

6. The gas turbine engine (20) of any preceding claim when dependent on claim 2, wherein the plurality of second outer cooling holes (124) disposed proximate the trailing edge (82) and the suction side (86) extend towards the leading edge (80).

7. The gas turbine engine (20) of any preceding claim when dependent on claim 2, wherein the plurality of third outer cooling holes (126) disposed proximate the pressure side (84) extend between the leading edge (82) and the trailing edge (82).

8. The gas turbine engine (20) of any preceding claim, wherein the plurality of second inner cooling holes (98) extend between 60% and 100% of a chordal extent.

9. The gas turbine engine (20) of any preceding claim, wherein the plurality of third inner cooling holes (100) extend between 50% and 100% of a chordal extent.

10. The gas turbine engine (20) of claim 2, or any preceding claim when dependent on claim 2, wherein the plurality of second outer cooling holes (124) extend between 50% and 100% of a chordal extent.

## Patentansprüche

1. Gasturbinentriebwerk (20), umfassend:
einen Turbinenabschnitt (28), der benachbart zu einem Brennkammerabschnitt (26) angeordnet ist, wobei der Turbinenabschnitt Folgendes beinhaltet:
eine Turbinenschaufel (62) mit einer inneren Plattform (72) und einer äußeren Plattform (74), die durch ein Profil (70) mit einer Druckseite (84) und einer Saugseite (86), die sich jeweils zwischen einer Vorderkante (80) und eine Hinterkante (82) erstrecken, miteinander verbunden sind,
wobei die innere Plattform (72) eine Vielzahl von zweiten inneren Kühllöchern (98), die in der Nähe der Hinterkante (82) und der Saugseite (86) angeordnet ist und sich von der Hinterkante (82) zur Vorderkante (80) hin erstreckt, und eine Vielzahl von dritten inneren Kühllöchern (100), die in der Nähe der Hinterkante (82) und der Druckseite (84) angeordnet ist und sich von der Hinterkante (82) zur Vorderkante (80) hin erstreckt, umfasst,
**dadurch gekennzeichnet, dass** die innere Plattform (72) eine Vielzahl von ersten inneren Kühllöchern (96) umfasst, die in der Nähe der Vorderkante (80) angeordnet ist und sich in Umfangsrichtung über die innere Plattform (72) von einem Punkt erstreckt, der in Umfangsrichtung von der Druckseite (84) beabstandet ist, und sich zur Saugseite (86) hin erstreckt,
wobei die Vielzahl von ersten inneren Kühllöchern (96) einen ersten Durchmesser aufweist und die Vielzahl von zweiten inneren Kühllöchern (98) einen zweiten Durchmesser aufweist, und der zweite Durchmesser der Vielzahl von zweiten inneren Kühllöchern (98) größer als der erste Durchmesser der Vielzahl von ersten inneren Kühllöchern (96) ist,
wobei die Vielzahl von ersten inneren Kühllöchern (96) eine erste Dichte aufweist und die Vielzahl von zweiten inneren Kühllöchern (98) eine zweite Dichte aufweist, und die zweite Dichte der Vielzahl von zweiten inneren Kühllöchern (98) größer als die erste Dichte der Vielzahl von ersten inneren Kühllöchern (96) ist.

2. Gasturbinentriebwerk (20) nach Anspruch 1, wobei die äußere Plattform (74) eine Vielzahl von ersten äußeren Kühllöchern (122), die in der Nähe der Vorderkante (80) angeordnet ist, eine Vielzahl von zweiten äußeren Kühllöchern (124), die in der Nähe der Hinterkante (82) und der Saugseite (86) angeordnet ist, und eine Vielzahl von dritten äußeren Kühllöchern (126), die in der Nähe der Druckseite (84) angeordnet ist und um die Hinterkante (82) herum verläuft und sich zur Saugseite (86) hin erstreckt, umfasst.

3. Gasturbinentriebwerk (20) nach Anspruch 2, wobei die Vielzahl von ersten äußeren Kühllöchern (122) einen ersten Durchmesser aufweist und die Vielzahl von zweiten äußeren Kühllöchern (124) einen zweiten Durchmesser aufweist, der kleiner als der erste Durchmesser ist.

4. Gasturbinentriebwerk (20) nach einem der vorhergehenden Ansprüche, wobei die innere Plattform (72) die Vielzahlen von ersten, zweiten und dritten inneren Kühllöchern (96, 98, 100) umfasst, die im Wesentlichen an geometrischen Koordinaten gemäß Werten kartesischer Koordinaten von Xi, Yi und Zi positioniert sind, wie in Tabelle 1 dargelegt, wobei jede der geometrischen Koordinaten von einem Bezugspunkt auf einer Triebwerksmittellinie (A) gemessen wird, wobei die X-Achse entlang der Richtung der Triebwerksmittellinie (A) definiert ist und die Z-Achse in einer radialen Richtung definiert ist, wobei die Kühllöcher eine Lagetoleranz ihres Mittelpunkts relativ zu den Koordinaten innerhalb eines Durchmessers von mindestens einem von 0,558 mm (0,022 Zoll) und 0,431 mm (0,017 Zoll) aufweisen.

5. Gasturbinentriebwerk (20) nach Anspruch 2 oder nach einem der vorhergehenden Ansprüche bei Abhängigkeit von Anspruch 2, wobei die äußere Plattform (74) die Vielzahlen von ersten, zweiten und dritten inneren Kühllöchern (122, 124, 126) umfasst, die im Wesentlichen an geometrischen Koordinaten gemäß Werten kartesischer Koordinaten von Xo, Yo und Zo positioniert sind, wie in Tabelle 2 dargelegt, wobei jede der geometrischen Koordinaten von einem Bezugspunkt auf der Triebwerksmittellinie (A) gemessen wird, wobei die X-Achse entlang der Richtung der Triebwerksmittellinie (A) definiert ist und die Z-Achse in einer radialen Richtung definiert ist, wobei die Kühllöcher eine Lagetoleranz ihres Mittelpunkts relativ zu den Koordinaten innerhalb eines Durchmessers von mindestens 0,558 mm (0,022 Zoll) und 0,431 mm (0,017 Zoll) aufweisen.

6. Gasturbinentriebwerk (20) nach einem der vorhergehenden Ansprüche bei Abhängigkeit von Anspruch 2, wobei sich die Vielzahl von zweiten äußeren Kühllöchern (124), die in der Nähe der Hinterkante (82) und der Saugseite (86) angeordnet ist, zur Vorderkante (80) hin erstreckt.

7. Gasturbinentriebwerk (20) nach einem der vorhergehenden Ansprüche bei Abhängigkeit von Anspruch 2, wobei sich die Vielzahl von dritten äußeren Kühllöchern (126), die in der Nähe der Druckseite (84) angeordnet ist, zwischen der Vorderkante (82) und der Hinterkante (82) erstreckt.

8. Gasturbinentriebwerk (20) nach einem der vorhergehenden Ansprüche, wobei sich die Vielzahl von zweiten inneren Kühllöchern (98) zwischen 60 % und 100 % einer Sehnenausdehnung erstreckt.

9. Gasturbinentriebwerk (20) nach einem der vorhergehenden Ansprüche, wobei sich die Vielzahl von dritten inneren Kühllöchern (100) zwischen 50 % und 100 % einer Sehnenausdehnung erstreckt.

10. Gasturbinentriebwerk (20) nach Anspruch 2 oder einem der vorhergehenden Ansprüche bei Abhängigkeit von Anspruch 2, wobei sich die Vielzahl von zweiten äußeren Kühllöchern (124) zwischen 50 % und 100 % einer Sehnenausdehnung erstreckt.

## Revendications

1. Moteur à turbine à gaz (20), comprenant :
une section de turbine (28) disposée de manière adjacente à une section de chambre de combustion (26), la section de turbine comportant :
une aube de turbine (62) ayant une plate-forme intérieure (72) et une plate-forme extérieure (74) reliées par un profil aérodynamique (70) ayant un côté pression (84) et un côté aspiration (86) s'étendant chacun entre un bord d'attaque (80) et un bord de fuite (82),
la plate-forme intérieure (72) comprenant une pluralité de deuxièmes trous de refroidissement intérieurs (98) disposés à proximité du bord de fuite (82) et du côté aspiration (86), et s'étendant du bord de fuite (82) vers le bord d'attaque (80), et une pluralité de troisièmes trous de refroidissement intérieurs (100) disposés à proximité du bord de fuite (82) et du côté pression (84) et s'étendant du bord de fuite (82) vers le bord d'attaque (80),
**caractérisé en ce que** la plate-forme intérieure (72) comprend une pluralité de premiers trous de refroidissement intérieurs (96) disposés à proximité du bord d'attaque (80) et s'étendant circonférentiellement à travers la plate-forme intérieure (72) à partir d'un point circonférentiellement espacé du côté pression (84) et s'étendant vers le côté aspiration (86),
dans lequel la pluralité de premiers trous de refroidissement intérieurs (96) ont un premier diamètre et la pluralité de deuxièmes trous de refroidissement intérieurs (98) ont un second diamètre, et le second diamètre de la pluralité de deuxièmes trous de refroidissement intérieurs (98) est supérieur au premier diamètre de la pluralité de premiers trous de refroidissement intérieurs (96),
dans lequel la pluralité de premiers trous de refroidissement intérieurs (96) ont une première densité et la pluralité de deuxièmes trous de refroidissement intérieurs (98) ont une seconde densité, et la seconde densité de la pluralité de deuxièmes trous de refroidissement intérieurs (98) est supérieure à la première densité de la pluralité de premiers trous de refroidissement intérieurs (96).

2. Moteur à turbine à gaz (20) selon la revendication 1, dans lequel la plate-forme extérieure (74) comprend une pluralité de premiers trous de refroidissement extérieurs (122) disposés à proximité du bord d'attaque (80), une pluralité de deuxièmes trous de refroidissement extérieurs (124) disposés à proximité du bord de fuite (82) et du côté aspiration (86), et une pluralité de troisièmes trous de refroidissement extérieurs (126) disposés à proximité du côté pression (84) et s'enroulant autour du bord de fuite (82) et s'étendant vers le côté aspiration (86).

3. Moteur à turbine à gaz (20) selon la revendication 2, dans lequel la pluralité de premiers trous de refroidissement extérieurs (122) a un premier diamètre et la pluralité de deuxièmes trous de refroidissement extérieurs (124) a un second diamètre qui est inférieur au premier diamètre.

4. Moteur à turbine à gaz (20) selon une quelconque revendication précédente, dans lequel la plate-forme intérieure (72) comprend les pluralités de premiers, deuxièmes et troisièmes trous de refroidissement intérieurs (96, 98, 100) positionnés sensiblement aux coordonnées géométriques conformément aux valeurs des coordonnées cartésiennes de Xi, Yi et Zi comme indiqué dans le tableau 1, dans lequel chacune des coordonnées géométriques est mesurée à partir d'un point de référence sur un axe de moteur (A) avec l'axe X défini le long de la direction de l'axe de moteur (A) et l'axe Z défini dans une direction radiale, les trous de refroidissement ont une tolérance de position de leur point central par rapport aux coordonnées dans un diamètre d'au moins l'un de 0,558 mm (0,022 pouce) et 0,431 mm (0,017 pouce).

5. Moteur à turbine à gaz (20) selon la revendication 2, ou une quelconque revendication précédente lorsqu'elle dépend de la revendication 2, dans lequel la plate-forme extérieure (74) comprend les pluralités de premiers, deuxièmes et troisièmes trous de refroidissement extérieurs (122, 124, 126) positionnés sensiblement aux coordonnées géométriques conformément aux valeurs des coordonnées cartésiennes de Xo, Yo et Zo comme indiqué dans le tableau 2, dans lequel chacune des coordonnées géométriques est mesurée à partir d'un point de référence sur un axe de moteur (A) avec l'axe X défini le long de la direction de l'axe de moteur (A) et l'axe Z défini dans une direction radiale, les trous de refroidissement ont une tolérance de position de leur point central par rapport aux coordonnées dans un diamètre d'au moins l'un de 0,558 mm (0,022 pouce) et 0,431 mm (0,017 pouce).

6. Moteur à turbine à gaz (20) selon une quelconque revendication précédente lorsqu'elle dépend de la revendication 2, dans lequel la pluralité de deuxièmes trous de refroidissement extérieurs (124) disposés à proximité du bord de fuite (82) et du côté aspiration (86) s'étendent vers le bord d'attaque (80).

7. Moteur à turbine à gaz (20) selon une quelconque revendication précédente lorsqu'elle dépend de la revendication 2, dans lequel la pluralité de troisièmes trous de refroidissement extérieurs (126) disposés à proximité du côté pression (84) s'étendent entre le bord d'attaque (82) et le bord de fuite (82).

8. Moteur à turbine à gaz (20) selon une quelconque revendication précédente, dans lequel la pluralité de deuxièmes trous de refroidissement intérieurs (98) s'étendent entre 60 % et 100 % d'une étendue de corde.

9. Moteur à turbine à gaz (20) selon une quelconque revendication précédente, dans lequel la pluralité de troisièmes trous de refroidissement intérieurs (100) s'étendent entre 50 % et 100 % d'une étendue de corde.

10. Moteur à turbine à gaz (20) selon la revendication 2, ou une quelconque revendication précédente lorsqu'elle dépend de la revendication 2, dans lequel la pluralité de deuxièmes trous de refroidissement extérieurs (124) s'étendent entre 50 % et 100 % d'une étendue de corde.
